# EUROPEAN PATENT SPECIFICATION

(11) **EP 2 893 113 B1**
(45) Date of publication and mention of the grant of the patent: **26.04.2017**
(21) Application number: 13747483.9
(22) Date of filing: 11.07.2013
(51) Int. Cl.: E06B 9/76

(54) **RAISING/LOWERING MECHANISM FOR A ROLLER BLIND**
MECHANISMUS ZUM HOCHZIEHEN/HERABLASSEN EINES ROLLLADENS
MÉCANISME POUR MONTER/DESCENDRE UN VOLET ROULANT

(30) Priority: 19.07.2012 GB 201212798
(43) Date of publication of application: 15.07.2015
(73) Proprietor: R. Soper Ltd., Barnoldswick, Lancashire BB18 5RH (GB)
(72) Inventor: SOPER, Ben, Barnoldswick, Lancashire BB18 5RH (GB)
(74) Representative: Hutchinson, Thomas Owen
(86) International application number: PCT/GB2013/051837
(87) International publication number: WO 2014/013228

(56) References cited:
- EP-A1- 1 568 845
- WO-A1-2012/080528
- US-A- 1 744 686

## Description

This invention relates to roller blinds, and in particular, but without limitation to mechanisms for roller window blinds.

There are many types of window blinds available on the market for use in both domestic and commercial environments, and one of the most common types is a horizontal roller blind. A horizontal roller blind typically comprises a tubular roller around which the curtain fabric is spooled, whereby rotation of the roller causes a lower edge of the curtain fabric spooled around the roller to be raised or lowered to reveal or cover a window adjacent which it has been affixed. The roller is usually located at, or towards the top of the window, which usually puts it out of reach, and so a pulley system is usually provided to enable the blind to be conveniently operated by user standing next to the window.

A known pulley system comprises a pair of stub axles that are mounted for rotation about a horizontal axis, which engage, and support, opposite ends of the roller tube. The stub axles are usually provided with engagement features that enable them to attach to brackets that can be glued or screwed to a window frame or surround to support the roller blind.

Examples of known roller blinds are described, for example, in the following published patent applications: EP1568845A1 (Deprat et al, 31 August 2005); US1744686A (Pease, 21 January 1930); and WO2012/080528 (Gaviota et al, 21 June 2012).

One of the stub axles typically comprises an integrally formed pulley wheel that engages a rope chain that a user can pull upon to effect raising or lowering of the blind. To avoid the need for an excessively long rope chain, it is customary for the rope chain to be provided in the form of a continuous loop.

Most roller blinds of the type described above additionally comprise a spring-loaded compressible element that enables the length of the roller/stub axle assembly to be temporarily shortened during its attachment to the brackets, which enables the roller to be fitted after the mounting brackets have been installed, and which also allow the roller to be removed at intervals for cleaning, servicing and repair. A further feature of known roller blinds is a friction or clutch arrangement that resists the weight of the curtain and which inhibits unintentional lowering of the curtain under its own weight when partially or fully unrolled from the roller.

Because windows vary so much width and height dimensions, most roller blinds, especially those for the retail market, are modular in construction to enable them to be customised prior to installation. To achieve this, the stub axles are usually separable from the roller so that they can be fitted to either end of the roller to enable the pull cord to be located on the left or right hand side of the blind, depending on user requirements. Also, the roller and curtain can usually be cut to size to enable the blind to fit to windows of differing widths, again according to user requirements. In many cases, the curtain itself can also be trimmed to length to match the intended "drop" of the blind, but this is not always necessary because excess curtain material can be stored, without detriment to the operation of the blind, on the roller itself, such that a portion of it is never unrolled in actual use.

Existing roller blinds are generally satisfactory in their design, construction and use, except that the rope chain loop, being in the form of a loop, has the potential to become tangled around foreign objects located near the window, which can be inconvenient. The invention therefore aims to provide a solution to this problem and/or to provide an alternative and/or improved roller blind or mechanism therefor.

Various aspects of the invention are set forth in the appendant claims.

The rotatable output member may comprise shaft projecting outwardly from the main body portion to which shaft a roller-engaging stub axle can be operatively connected. The shaft, where provided, may be tubular, part-tubular or solid.

The rotatable output member may comprise a drive annulus located within the main body portion to which drive annulus a roller-engaging stub axle can be operatively connected.

Because of the overhead location of most roller blinds, the input shaft, in most cases, will extend downwardly, in use, from the mechanism. As such, in a known geared raising/or lowering mechanism, the mechanism is one-sided, meaning that it can only be fitted to either the left or to the right hand side of the roller. In effect, a "mirror-image" version of the mechanism needs to be provided if the mechanism is to be fitted to an opposite side of the window. This is one of the major disadvantages of known geared roller blind mechanisms - because it greatly restricts the flexibility of the blind in terms of it being customised on-site at the time of installation. The invention, by contrast, affords much greater flexibility because the through hole and drive annulus can allow a roller-engaging stub axle to be fitted to the mechanism from either side, meaning that the mechanism can be customised to fit to either the left or to the right hand side of the blind, depending on user requirements.

In addition, because the raising/lowering mechanism is based on a geared actuator system, rather than on a pulley system, the possibility of a pull cord becoming tangled, or entangled with foreign objects, is effectively removed.

The rotatable drive annulus preferably comprises one or more formations for positively engaging a stub axle, most preferably to inhibit or prevent relative rotation of the stub axle, when fitted, and the drive annulus. The formations may comprise ribs, grooves, or both, which engage with complementary shaped features of the stub axle.

The stub axles, where provided, preferably comprise a roller-engaging end and a drive annulus-engaging end. The roller-engaging end preferably comprises radially resilient features to provide a friction fit or gripping connection between it and the roller. The roller-engaging end and the drive annulus-engaging end of the stub axle may be integrally formed, or they may be separate components that are interconnected by a clutch arrangement or by an axially compressible component. The clutch arrangement, where provided, is preferably adapted to inhibit or prevent unwanted un-rolling of the curtain, which is to say, rolling or un-rolling when the input shaft is not being deliberately rotated by a user. The axially compressible component, where provided, may conveniently facilitate connection and/or detachment of the roller from the brackets or drive mechanism.

The gear mechanism preferably comprises a wheel gear that is operatively connected to the rotatable drive annulus, or integrally formed therewith. In a most preferred embodiment of the invention, the drive annulus comprises radially outwardly extending gear teeth that are operatively engageable with a worm gear operatively connected to the input shaft. The use of a worm gear and wheel gear conveniently affords a self-locking mechanism that inhibits rotation of the drive annulus-the gear ration being such that it is relatively easy to drive the drive annulus using the worm gear, but not the other way around.

However, worm gear sets can be expensive to manufacture and require high tolerances, which can render them unsuited to mass-production mechanisms. An alternative to a worm gear set comprises a pair of cross-axial helical gears that enable the axis of rotation of the input shaft to be offset, for example, by ninety degrees, to the axis of rotation of the output. Although, in the present application, a cross-axial helical gear set affords some resistance to the roller turning the input shaft of the mechanism, it is preferable to provide a clutch assembly between the roller and the output to inhibit or prevent this from happening.

The input shaft preferably extends from an intended lower side of the raising/lowering mechanism, and preferably comprises a connector for connection to a user-operable crank shaft. The connector may comprise a hook or eye that is engageable with a hook or eye of a crank shaft to enable the input shaft to be rotated from a non-axial position. The connector may comprise a universal joint (UJ). The user operable crank shaft preferably comprises an elongate shaft having a connection at one end for connection to the input shaft and a crank at the other end. The crank may be formed as a pair of spaced-apart hinged connections to enable an end of the crank shaft to be temporarily bent into an S-shape and may optionally comprise a rotatable sleeve to facilitate gripping, by a user, in use, of the rotating crank shaft.

A preferred embodiment of the invention shall now be described, by way of example only, with reference to the accompanying drawings in which:
Figure 1 is a perspective view of an embodiment of a raising/lowering mechanism of the invention, its associated stub axles and mounting brackets;
Figure 2 is a perspective view of the raising/lowering mechanism of Figure 1;
Figure 3 is a partially cut-away view of the raising/lowering mechanism of Figure 2;
Figure 4 is a perspective view of the internal components of the raising/lowering mechanism of Figure 3 with part of a stub axle affixed thereto;
Figure 5 is a perspective view of the internal components of the raising/lowering mechanism of Figure 3 with a complete stub axle affixed thereto; and
Figure 6 is a partially cut-away perspective view of the raising/lowering mechanism of Figure 2 showing the engagement of a stub axle with the drive annulus.

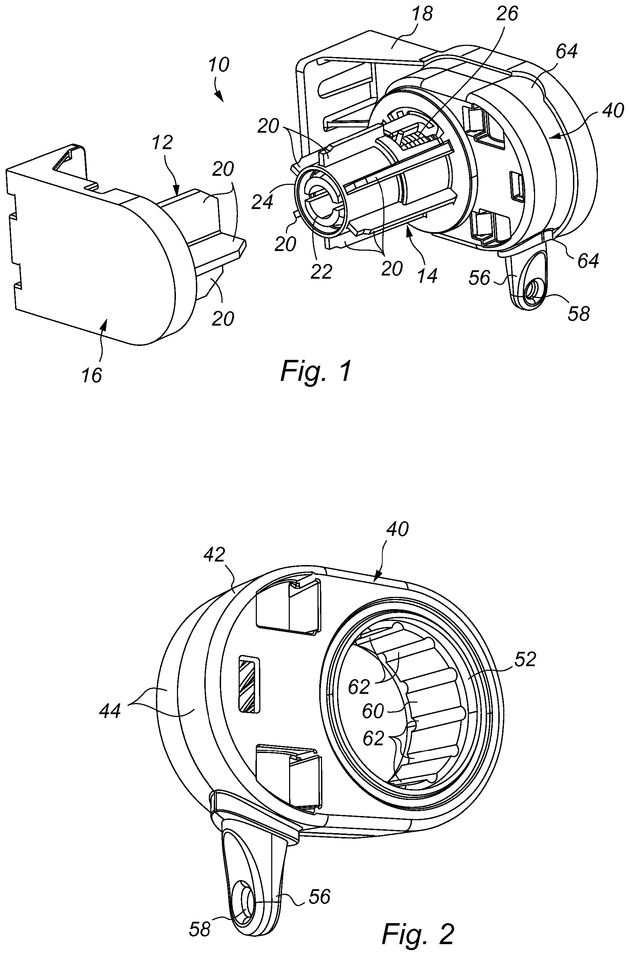

In Figure 1, an embodiment of the invention 10 is shown, which comprises a pair of stub axles 12, 14 mounted for rotation about horizontal and coincident axes by a pair of mounting brackets 16, 18. Each of the stub axles 12, 14 comprises a set of radially-extending ribs 20 that engage the interior surface of a tubular roller (not shown) around which roller which a flexible web of curtain fabric (not shown) is spooled. The brackets 16, 18 support the weight of the roller and curtain a short distance from a wall or window frame thus enabling the curtain to hang below the roller to cover the window when deployed.

One of the stub axles 14 (the right hand one in the drawing) is driven for rotation about its horizontal axis by a drive mechanism 40, described in detail below, whereas the other stub axle 12 is mounted to rotate freely, that is, to be driven by the other stub axle 14, via the roller (not shown).

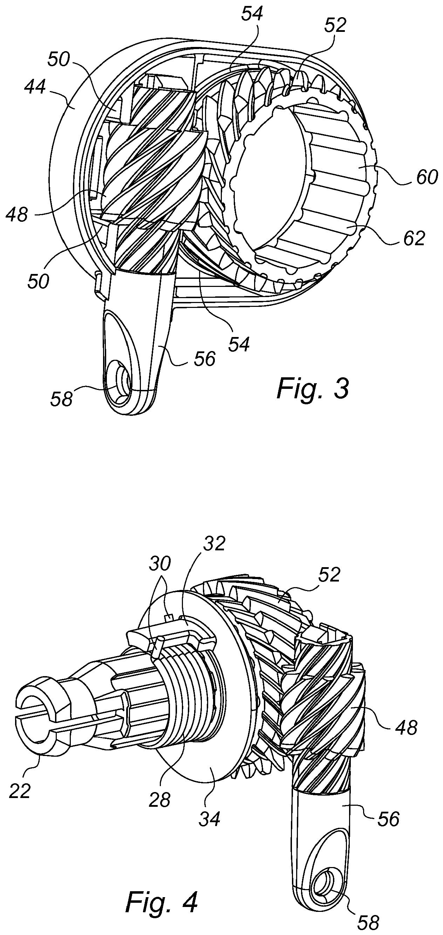

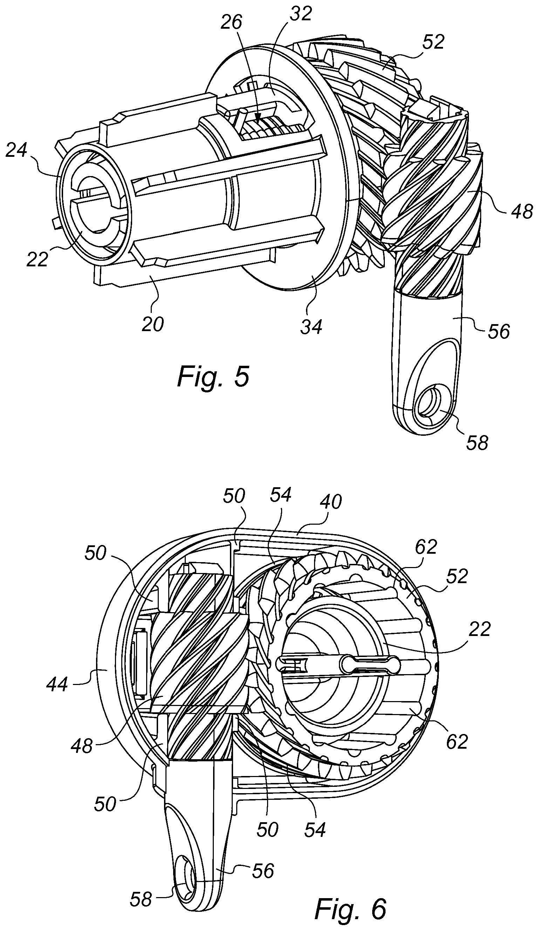

The driving stub axle 14 comprises relatively rotatable inner tube portion 22 and outer tube portions 24 that are constrained to rotate in unison by a spring-clutch assembly 26. The spring clutch assembly 26 (as is best seen in Figures 4 and 5) comprises a coil spring 28 with a radially outwardly projecting end portions 30 that abut against opposite sides of a pin 32 extending axially from a flange 34 connected to the inner tube 22. The spring clutch assembly 26 grips the inner 22 and outer tube portions 24 to resist the rotation force imparted on the roller by the weight of the curtain. The operation of the spring clutch assembly is well-known and does not require further explanation herein.

In Figures 2 and 3 in particular, it will be noted that the drive mechanism 40 of the illustrated embodiment, comprises a housing 42 encasing the internal components of the drive mechanism. The housing 42 is conveniently manufactured from a pair of shell casings 44 that can be clipped together to retain the inner workings of the mechanism in situ. In Figure 6, one of the shell casings 44 has been removed, to reveal a vertically oriented cross-axial helical gear (or pinion) 48 that is mounted for axial rotation by a pair of recess formations 50 integrally formed with the interiors of the shell casings 44. The teeth of the pinion 48 engage with the teeth of another, annular cross-axial helical gear 52, whose axis of rotation is perpendicular to that of the pinion 48. Similarly, the annular gear 52 is mounted for rotation relative to the housing 42 by integrally moulded retaining features 54 that engage the annular gear 52 from opposite sides when the shell casings 44 are clipped together. Thus, rotation of the pinion 48 causes the annular gear 52 to rotate in unison with it.

Extending axially from, and integrally moulded with, the pinion 48 is an input shaft 56 having a through hole 58 at its free end, to which a crank handle (not shown) can be connected to effect rotation of the input shaft 56, and thus the annular gear 52.

As previously described, the annular gear 52 is supported externally by the moulded retaining features 54 of the shell casings, and thus has no axle. The interior surface 60 of the annular gear 52 is provided with a series of axial grooves 62 which positively engage with complementarily-shaped ribs on the exterior surface of the stub axle 14.

It will be noted, from Figures 2 and 3 in particular, that the annular gear 52 is accessible from either side of the mechanism 40, and so a stub axle 14 can be fitted to either side of the mechanism 40 so that it can be placed on either the left or right hand side of the blind.

As can be seen from Figure 1, the mounting bracket 18 for the mechanism 40 is reversible, that is to say, having a cut-out 64 for receiving the input shaft 58 from either above or below. As such, the mounting bracket 18 can be inverted for use at the opposite end of the blind to that shown in Figure 1, whilst the mechanism itself 40 remains in the same orientation, albeit with the stub axle 14 fitted to the opposite side to that shown in Figure 1.

The illustrated embodiment of the invention thus enables a geared drive mechanism to be fitted to either side of the blind, using a common set of components. In addition, by using a geardrive mechanism, the need for a pulley or looped rope chain is avoided, thereby reducing the likelihood of tangling of the loop and/or entanglement of the loop with foreign objects.

The components of the drive mechanism are preferably manufactured from a plastics material, such as acetyl, acrylonitrile butadiene styrene (ABS), polyethylene (PE) or polypropylene (PP) which are readily injection-mouldable plastics. Acetyl and ABS, in particular, may be selected for the gears and bearing surfaces due to their relatively high hardness, wear resistance and their ability to be moulded with a smooth/shiny finish.

The embodiment of the invention shown in the drawings is merely exemplary of the invention and it is to be understood that the shape and configuration of the various components could be altered without departing from the scope of the invention.

The following statements are not the claims, but relate to various aspects of the invention:

| | |
|---|---|
| Statement 1. | A raising/lowering mechanism for a roller blind comprising a main body portion, a rotatable output member to which, in use, a roller-engaging stub axle can be operatively connected to effect rotation, in use, of an attached roller, a rotatable input shaft geared to the rotatable output member such that, in use, rotation of the input shaft causes the rotatable output member to rotate, wherein the rotatable |
| | output member is accessible from opposite sides of the main body portion to permit, in use, the roller-engaging stub axle to be operatively connected thereto from either side of the mechanism. |
| Statement 2. | The raising/lowering mechanism of statement 1, wherein the rotatable output member comprises a shaft projecting outwardly from the main body portion. |
| Statement 3. | The raising/lowering mechanism of statement 2, wherein the shaft comprises a tubular portion. |
| Statement 4. | The raising/lowering mechanism of statement 1, wherein the rotatable output member comprises a drive annulus located within the main body portion. |
| Statement 5. | The raising/lowering mechanism of statement 4, wherein the main body portion comprises a through hole within which through hole the drive annulus is located. |
| Statement 6. | The raising/lowering mechanism of statement 4 or 5, wherein the rotatable drive annulus comprises one or more formations for positively engaging the stub axle. |
| Statement 7. | The raising/lowering mechanism of any preceding statement, wherein the rotatable input shaft is geared to the rotatable output member via a radial gear and worm gear assembly. |
| Statement 8. | The raising/lowering mechanism of statement 7, wherein the worm gear is integrally formed with the input shaft. |
| Statement 9. | The raising/lowering mechanism of statement 7 or 8 when dependent on statement 4, wherein the drive annulus comprises radially outwardly extending gear teeth that are operatively engageable with the worm gear. |
| Statement 10. | The raising/lowering mechanism of any of statements 1 to 6, wherein the rotatable input shaft is geared to the rotatable output member via a set of cross-axial helical gears. |
| Statement 11. | The raising/lowering mechanism of statement 10, wherein the pinion gear of the cross- axial helical gear set is integrally formed with the input shaft. |
| Statement 12. | The raising/lowering mechanism of statement 10 or 11 when dependent on statement 4, wherein the drive annulus comprises radially outwardly extending gear teeth that are operatively engageable with the pinion gear. |
| Statement 13. | A roller blind comprising a raising/lowering mechanism according to any preceding statement. |
| Statement 14. | The roller blind of statement 13, further comprising a stub axle. |
| Statement 15. | The roller blind of statement 14, wherein the stub axle comprises a roller-engaging end and a drive member-engaging end. |
| Statement 16. | The roller blind of statement 15, wherein the roller-engaging end comprises radially resilient features to provide, in use, a friction fit or gripping connection between it and the roller. |
| Statement 17. | The roller blind of statement 15 or 16, wherein the roller-engaging end and the output member -engaging end of the stub axle are integrally formed. |
| Statement 18. | The roller blind of statement 15 or 16, wherein the roller-engaging end and the output member-engaging end of the stub axle are separate components interconnected by a clutch arrangement. |
| Statement 19. | The roller blind of statement 15 or 16, wherein the roller-engaging end and the output member-engaging end of the stub axle are separate components interconnected by an axially compressible component. |
| Statement 20. | The roller blind of statements 13 to 19, further comprising a crank shaft having a connector for connection to the input shaft of the mechanism. |
| Statement 21. | The roller blind of statement 20, wherein the crank shaft comprises an elongate shaft having a crank located at or near to its free end, the crank being formed as a pair of spaced- apart hinged connections. |
| Statement 22. | The roller blind of statements 13 to 21, further comprising a mounting bracket. |
| Statement 23. | The roller blind of statement 22, wherein the mounting bracket comprises a pair of cut-outs for locating the input shaft from either above or below. |
| Statement 24. | The roller blind of statements 13 to 23, further comprising any one or more of the group comprising: a roller; a flexible web; a set of mounting screws; and a set of brackets. |
| Statement 25. | A raising/lowering mechanism or a roller blind substantially as hereinbefore described, with reference to, and as illustrated in, the accompanying drawings. |

## Claims

1. A roller blind comprising:
a raising/lowering mechanism (10) comprising a main body portion (40), a rotatable output member (52) to which, in use, a roller-engaging stub axle (14) can be operatively connected to effect rotation, in use, of an attached roller, a rotatable input shaft (56) geared (48) to the rotatable output member (52) such that, in use, rotation of the input shaft (56) causes the rotatable output member (52) to rotate, wherein the rotatable output member (52) is accessible from opposite sides of the main body portion (40) to permit, in use, the roller-engaging stub axle (14) to be operatively connected thereto from either side of the mechanism (10); and **characterised by**:
a mounting bracket (18) comprising a pair of cut-outs (64) for locating the input shaft (56) from either above or below.

2. The roller blind of claim 1, wherein the rotatable output member (52) comprises a tubular shaft projecting outwardly from the main body portion.

3. The roller blind of claim 1, wherein the rotatable output member (52) comprises a drive annulus located within the main body portion (40).

4. The roller blind of claim 3, wherein the main body portion (40) comprises a through hole within which through hole the drive annulus is located.

5. The roller blind of claim 3 or claim 4, wherein the rotatable drive annulus comprises one or more formations (62) for positively engaging the stub axle (14).

6. The roller blind of any preceding claim, wherein the rotatable input shaft (56) is geared to the rotatable output member (52) via a radial gear (48) integrally formed with the input shaft (56) and worm gear assembly.

7. The roller blind of claim 6 when dependent on claim 3, wherein the drive annulus comprises radially outwardly extending gear teeth that are operatively engageable with the worm gear (48).

8. The roller blind of any of claims 1 to 5, wherein the rotatable input shaft (56) is geared to the rotatable output member (52) via a set of cross-axial helical gears.

9. The roller blind of claim 8, wherein the pinion gear (48) of the cross-axial helical gear set is integrally formed with the input shaft (56).

10. The roller blind of claim 8 or claim 9 when dependent on claim 3, wherein the drive annulus comprises radially outwardly extending gear teeth that are operatively engageable with the pinion gear (48).

11. The roller blind of any preceding claim, wherein the roller-engaging end comprises radially resilient features (20) to provide, in use, a friction fit or gripping connection between it and the roller.

12. The roller blind of any preceding claim, wherein the roller-engaging end and the output member-engaging end of the stub axle (14) are integrally formed.

13. The roller blind of any of claims 1 to 11, wherein the roller-engaging end and the output member-engaging end of the stub axle are separate components interconnected by a clutch arrangement (26).

14. The roller blind of any or claims 1 to 11, wherein the roller-engaging end and the output member-engaging end of the stub axle (14) are separate components interconnected by an axially compressible component.

15. The roller blind of any preceding claim, further comprising any one or more of the group comprising: a roller; a flexible web; a set of mounting screws; a set of brackets (18, 16); a crank shaft having a connector for connection to the input shaft of the mechanism; a crank shaft comprising an elongate shaft having a crank located at or near to its free end, the crank being formed as a pair of spaced-apart hinged connections; a stub axle (14); and a stub axle comprising a roller-engaging end and a drive member-engaging end.

## Patentansprüche

1. Rollo, umfassend:
Einen Hebe-/Senkmechanismus (10), der einen Hauptkörperabschnitt (40), ein drehbares Ausgangselement (52) umfasst, an das sich, im Einsatz, eine Walze in Eingriff bringbarer Achszapfen (14) betriebsfähig anschließen lässt, um Drehung, im Einsatz, einer angebrachten Walze zu bewirken, eine drehbare Eingangswelle (56), die mit dem drehbaren Ausgangselement (52) verzahnt (48) ist, derart, dass, im Einsatz, die Drehung der Eingangswelle (56) bewirkt, dass sich das drehbare Ausgangselement (52) dreht, wobei das drehbare Ausgangselement (52) von entgegengesetzten Seiten des Hauptkörperabschnitts (40) zugänglich ist, um, im Einsatz, dem mit der Walze in Eingriff bringbaren Achszapfen (14) zu ermöglichen, betriebsfähig von beiden Seiten des Mechanismus (10) damit verbunden zu werden; und **gekennzeichnet durch**:
Einen Montageträger (18), der ein Paar von Ausschnitten (64) zum Positionieren der Eingangswelle (56) entweder von oben oder unten umfasst.

2. Rollo nach Anspruch 1, wobei das drehbare Ausgangselement (52) eine rohrförmige Welle umfasst, die aus dem Hauptkörperabschnitt nach außen hervorsteht.

3. Rollo nach Anspruch 1, wobei das drehbare Ausgangselement (52) einen Antriebskranz umfasst, der innerhalb des Hauptkörperabschnitts (40) positioniert ist.

4. Rollo nach Anspruch 3, wobei der Hauptkörperabschnitt (40) ein Durchgangsloch umfasst innerhalb dessen der Antriebskranz positioniert ist.

5. Rollo nach Anspruch 3 oder Anspruch 4, wobei der drehbare Antriebskranz eine oder mehrere Formationen (62) zum positiven in Eingriff bringen des Achszapfens (14) umfasst.

6. Rollo nach einem vorhergehenden Anspruch, wobei die drehbare Eingangswelle (56) mit dem drehbaren Ausgangselement (52) über ein Radialrad (48) verzahnt ist, das integral mit der Eingangswelle (56) und der Schneckenradbaugruppe geformt ist.

7. Rollo nach Anspruch 6, wenn von Anspruch 3 abhängig, wobei der Antriebskranz sich radial nach außen erstreckende Getriebezähne umfasst, die betriebsfähig mit dem Schneckenrad (48) in Eingriff bringbar sind.

8. Rollo nach einem der Ansprüche 1 bis 5, wobei die drehbare Eingangswelle (56) mit dem drehbaren Ausgangselement (52) über einen Satz von Kreuz-Schrägverzahnungen verzahnt ist.

9. Rollo nach Anspruch 8, wobei das Ritzel (48) des Kreuz-Schrägverzahnungsatzes integral mit der Eingangswelle (56) gebildet ist.

10. Rollo nach Anspruch 8 oder Anspruch 9, wenn von Anspruch 3 abhängig, wobei der Antriebskranz sich radial nach außen erstreckende Getriebezähne umfasst, die betriebsfähig mit dem Ritzel (48) in Eingriff bringbar sind. Rollo nach einem vorhergehenden Anspruch, wobei das Walzen in Eingriff bringende Ende radial nachgiebige Merkmale (20) umfasst, um, im Einsatz, einen Reibungssitz oder eine greifende Verbindung zwischen diesem und der Walze bereitzustellen.

11. Rollo nach einem vorhergehenden Anspruch, wobei das Walzen in Eingriff bringende Ende und das Ausgangselement in Eingriff bringende Ende des Achszapfens (14) integral gebildet sind.

12. Rollo nach einem vorhergehenden Anspruch, wobei das Walzen in Eingriff bringende Ende und das Ausgangselement in Eingriff bringende Ende des Achszapfens getrennte durch eine Kupplungsanordnung (26) verbundene Bestandteile sind.

13. Rollo nach einem der Ansprüche 1 bis 11, wobei das Walzen in Eingriff bringende Ende und das Ausgangselement in Eingriff bringende Ende des Achszapfens (14) getrennte durch ein axial komprimierbares Bestandteil verbundene Bestandteile sind. Rollo nach einem vorhergehenden Anspruch, das eins oder mehrere der Gruppe umfasst, die Folgendes umfasst: Eine Walze; ein flexibles Gewebe; einen Satz Montageschrauben; einen Satz von Trägern (18, 16); eine Kurbelwelle mit einem Verbinder zum Anschluss an die Eingangswelle des Mechanismus; eine Kurbelwelle, die eine längliche Welle mit einer Kurbel umfasst, die an oder nahe ihres freien Endes positioniert ist, wobei die Kurbel als ein Paar von beabstandeten Scharnierverbindungen gebildet ist; einen Achszapfen (14); und einen Achszapfen, der ein Walzen in Eingriff bringendes Ende und ein Antriebselement in Eingriff bringendes Ende umfasst.

14. Rollo nach einem der Ansprüche 1 bis 11, wobei das Walzen in Eingriff bringende Ende und das Ausgangselement in Eingriff bringende Ende des Achszapfens (14) getrennte Bestandteile sind, die durch ein axial komprimierbares Bestandteil verbunden sind.

15. Rollo nach einem vorhergehenden Anspruch, das ferner eins oder mehrere der Gruppe umfasst, die Folgendes umfasst: Eine Walze; ein flexibles Gewebe; einen Satz Montageschrauben; einen Satz von Trägern (18, 16); eine Kurbelwelle mit einem Verbinder zum Anschluss an die Eingangswelle des Mechanismus; eine Kurbelwelle, die eine längliche Welle mit einer Kurbel umfasst, die an oder nahe ihres freien Endes positioniert ist, wobei die Kurbel als ein Paar von beabstandeten Scharnierverbindungen gebildet ist; einen Achszapfen (14); und einen Achszapfen, der ein Walzen in Eingriff bringendes Ende und ein Antriebselement in Eingriff bringendes Ende umfasst.

## Revendications

1. Un store à rouleau comprenant :
un mécanisme de levage/abaissement (10) comprenant une partie corps principal (40), un élément de sortie rotatif (52) auquel, en utilisation, un demi-essieu de mise en prise de rouleau (14) peut être raccordé de manière opérationnelle de façon à effectuer une rotation, en utilisation, d'un rouleau rattaché, un arbre d'entrée rotatif (56) engrené (48) à l'élément de sortie rotatif (52) de sorte que, en utilisation, une rotation de l'arbre d'entrée (56) amène l'élément de sortie rotatif (52) à se mettre en rotation, où l'élément de sortie rotatif (52) est accessible à partir de côtés opposés de la partie corps principal (40) de façon à permettre, en utilisation, au demi-essieu de mise en prise de rouleau (14) d'être raccordé de manière opérationnelle à celui-ci à partir des deux côtés du mécanisme (10), et **caractérisé par** :
un étrier de montage (18) comprenant une paire de découpes (64) destinées au positionnement de l'arbre d'entrée (56) à partir de soit le dessus ou le dessous.

2. Le store à rouleau selon la Revendication 1, où l'élément de sortie rotatif (52) comprend un arbre tubulaire en saillie vers l'extérieur à partir de la partie corps principal.

3. Le store à rouleau selon la Revendication 1, où l'élément de sortie rotatif (52) comprend un anneau d'entraînement placé à l'intérieur de la partie corps principal (40).

4. Le store à rouleau selon la Revendication 3, où la partie corps principal (40) comprend un trou traversant, l'anneau d'entraînement étant situé à l'intérieur dudit trou traversant.

5. Le store à rouleau selon la Revendication 3 ou 4, où l'anneau d'entraînement rotatif comprend une ou plusieurs formations (62) destinées à une mise en prise positive du demi-essieu (14).

6. Le store à rouleau selon l'une quelconque des Revendications précédentes, où l'arbre d'entrée rotatif (56) est engrené à l'élément de sortie rotatif (52) par l'intermédiaire d'un engrenage radial (48) formé d'un seul tenant avec l'arbre d'entrée (56) et un ensemble vis sans fin.

7. Le store à rouleau selon la Revendication 6 lorsqu'elle dépend de la Revendication 3, où l'anneau d'entraînement comprend des dents d'engrenage s'étendant radialement vers l'extérieur qui peuvent entrer en prise de manière opérationnelle avec la vis sans fin (48).

8. Le store à rouleau selon l'une quelconque des Revendications 1 à 5, où l'arbre d'entrée rotatif (56) est engrené à l'élément de sortie rotatif (52) par l'intermédiaire d'un ensemble d'engrenages hélicoïdaux à croisement axial.

9. Le store à rouleau selon la Revendication 8, où l'engrenage à pignons (48) de l'ensemble d'engrenages hélicoïdaux à croisement axial est formé d'un seul tenant avec l'arbre d'entrée (56).

10. Le store à rouleau selon la Revendication 8 ou 9, lorsqu'elle dépend de la Revendication 3, où l'anneau d'entraînement comprend des dents d'engrenage s'étendant radialement vers l'extérieur qui peuvent entrer en prise de manière opérationnelle avec l'engrenage à pignons (48).

11. Le store à rouleau selon l'une quelconque des Revendications précédentes, où l'extrémité entrant en prise avec le rouleau comprend des caractéristiques radialement élastiques (20) destinées à la fourniture, en utilisation, d'un ajustement par frottement ou d'un raccord de serrage entre celle-ci et le rouleau.

12. Le store à rouleau selon l'une quelconque des Revendications précédentes, où l'extrémité entrant en prise avec le rouleau et l'extrémité entrant en prise avec l'élément de sortie du demi-essieu (14) sont formées d'un seul tenant.

13. Le store à rouleau selon l'une quelconque des Revendications 1 à 11, où l'extrémité entrant en prise avec le rouleau et l'extrémité entrant en prise avec l'élément de sortie du demi-essieu sont des composants distincts interraccordés par un agencement d'embrayage (26).

14. Le store à rouleau selon l'une quelconque des Revendications 1 à 11, où l'extrémité entrant en prise avec le rouleau et l'extrémité entrant en prise avec l'élément de sortie du demi-essieu (14) sont des composants distincts interraccordés par un composant axialement compressible.

15. Le store à rouleau selon l'une quelconque des Revendications précédentes, comprenant en outre un élément ou plusieurs du groupe comprenant : un rouleau, une toile souple, un ensemble de vis de montage, un ensemble d'étriers (18, 16), un vilebrequin possédant un connecteur destiné à un raccordement à l'arbre d'entrée du mécanisme, un vilebrequin comprenant un arbre allongé possédant une manivelle située au niveau ou près de son extrémité libre, la manivelle étant formée sous la forme d'une paire de raccords à charnière espacés l'un de l'autre, un demi-essieu (14) et un demi-essieu comprenant une extrémité entrant en prise avec le rouleau et une extrémité entrant en prise avec l'élément d'entraînement.
